# EUROPEAN PATENT APPLICATION

(11) **EP 1 771 043 A1**
(43) Date of publication of application: **04.04.2007**
(21) Application number: 05292032.9
(22) Date of filing: 29.09.2005
(51) Int. Cl.: H05B 37/02, G08C 17/00, H02J 7/35

(54) **Method for supplying power to a device**

(71) Applicant: Nortel Networks Limited, St Laurent, Québec H4S 2A9 (CA)
(72) Inventor: Duplessis, Philippe, 92700 Colombes (FR)
(74) Representative: Loisel, Bertrand

(57) **Abstract**

The invention proposes a method for supplying power to a device (1) comprising photosensitive means (7) arranged for changing a received luminous energy into electric power, the device being associated with power storage means (4) for storing electric power obtained by the photosensitive means. The method comprises the following steps :
- detecting a remaining load in the power storage means ; and
- when said remaining load is below a first threshold, commanding a light source (5) to be switched on.

## Description

The present invention relates to power supply.

It is known to supply power to a device by virtue of a battery associated with the device. Such battery typically has a lifetime of several months or years. It generally needs costly periodical maintenance, which may become problematic when a large number of devices are used in a common application.

As an alternative, it is also known to use solar batteries, especially for devices having low power consumption. The devices are thus supplied with power obtained by transformation of luminous energy. However, the solar batteries are appropriate only for devices almost permanently exposed to light or which need to operate during the light exposure time only.

It is also possible to combine a solar battery with a buffer battery providing a limited power storage capacity to a device. The buffer battery can thus be loaded by the solar battery during exposure to light, e.g. during the day, whereas it supplies power to the device when no or not enough light is received by the solar battery, e.g. during the night. The buffer battery is advantageously designed so that it can store an appropriate power amount, in order to supply power to the device during the whole darkness period.

Although such functioning is relatively efficient, it can happen that the darkness period exceeds the total capacity of the buffer battery. In this case, the device cannot be supplied with power any more.

Such situation can be prejudicial, especially when the power supplied device must remain operable with few or no interruption. For example, when the device comprises a sensor for detecting intrusion in a room, it is important that the sensor can still operate when the room owners are on vacation and have closed the shutters in the room.

An object of the present invention is to supply power in a way that limits the above-mentioned disadvantages.

Another object of the present invention is to supply power with few or no interruption.

Another object of the present invention is to supply power at a reasonable cost.

The invention thus proposes a method for supplying power to a device comprising photosensitive means arranged for changing a received luminous energy into electric power, the device being associated with power storage means for storing electric power obtained by the photosensitive means. The method comprises the following steps :
- detecting a remaining load in the power storage means ; and
- when said remaining load is below a first threshold, commanding a light source to be switched on.

Therefore, when the remaining load in the power storage means is too low to durably supply power to the device, because the luminous energy received by the photosensitive means is not sufficient, a light is switched on, implying the recharging of the power storage means. In this way, the device can still be supplied with power. It is thus possible to supply power to the device with few or even no interruption. Moreover, this can be achieved without any human intervention.

The device can be of any type. For instance, it can include a sensor.

Advantageously, the light source can be commanded to be switched off when the remaining load in the power storage means is above a second threshold, the second threshold value being more than the first threshold value. This avoids unnecessary power consumption by the light source, while the power storage means are capable of durably supplying power to the device.

The command to switch on or switch off the light source can comprise the sending of a signal from the device via communication means. The signal can be addressed directly to a switch controlling the light source or to a coordination device which, in its turn, sends a signal to a switch controlling the light source. The communication means can advantageously be wireless, such as radio communication means for instance.

Advantageously, the power storage means are designed to store a predetermined amount of electric power set for supplying the device substantially for a whole night after the photosensitive means of the device have been exposed to the daylight substantially for a whole day. In this case, the light source is switched on under unusual conditions, such a long time without exposure to daylight.

The invention also proposes a device comprising photosensitive means arranged for changing a received luminous energy into electric power, the device being associated with power storage means for storing electric power obtained by the photosensitive means. The device further comprises :
- means for detecting a remaining load in the power storage means ; and
- means for commanding a light source to be switched on when said remaining load is below a first threshold.
   The preferred features of the above aspects which are indicated by the dependent claims may be combined as appropriate, and may be combined with any of the above aspects of the invention, as would be apparent to a person skilled in the art.
- FIG 1 shows a first architecture example of a system implementing the invention ; and
- FIG 2 shows a second architecture example of a system implementing the invention.

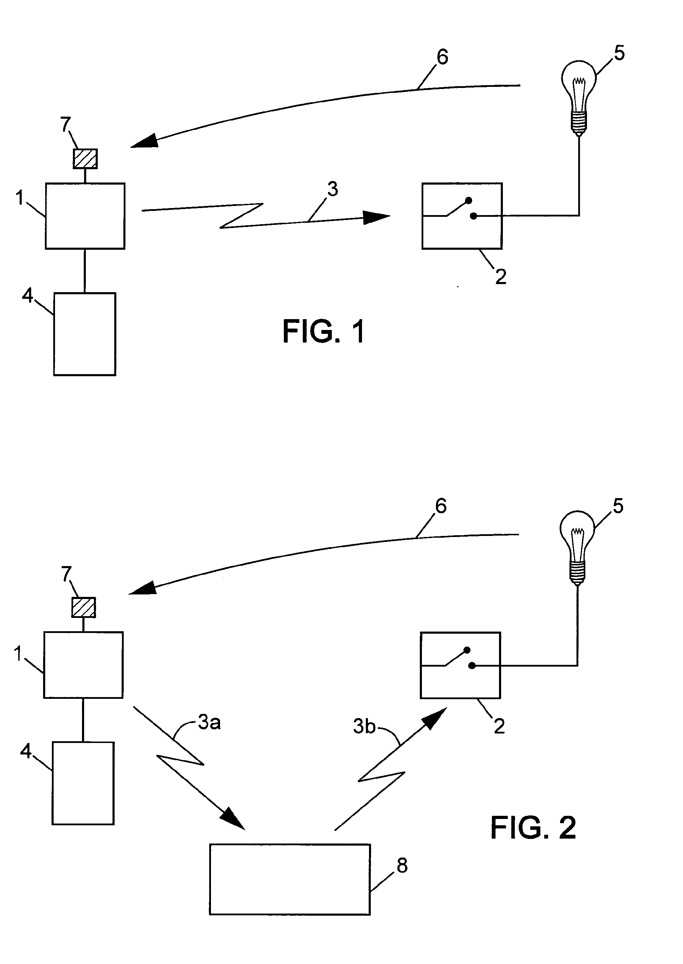

FIG.1 shows a device 1 having photosensitive means such as a solar cell 7. This solar cell 7 converts incident light into electric power.

Moreover, the device 1 is associated with power storage means, such as a buffer battery 4. This battery 4 is arranged for storing the electric power provided by the solar cell 7.

The device 1 can be of any type. For example, it can comprise a sensor for domestic or industrial use. Such sensor can include a temperature probe or an intrusion detector for instance. Of course, it can also achieve any other function or task. It can be an autonomous device or part of a network. In the latter case, it advantageously comprises communication means for communicating with other entities of the network, as will be explained more in detail in the following. The communication means can be wireless means, such as radio means operating in accordance with the ZigBee specification 053474r06, Version 1.0, published on June 27, 2005, by the ZigBee^{™} Alliance. The device can also be part of an Ambient network for instance.

The remaining load in the battery 4 can be detected. The detection can be performed by the device 1 associated with the battery 4 for instance. It can consist in a continuous monitoring process or in an occasional or periodic evaluation of the remaining load in the battery 4.

Once it has been detected, the remaining load is then compared to a first threshold, in order to know whether there is a sufficient power amount for the device 1 to keep on operating. To this end, the first threshold can be set to 0 (no more power stored in the battery 4). But preferably, it will be set to more than 0, in order to anticipate the end of the power supply from the battery 4. As an illustration, the first threshold could thus be set between 5 and 15% of the total storage capacity of the battery 4.

When the remaining load is more than the first threshold, this means that the battery 4 can provide the device 1 with power for a sufficiently long time to avoid an abrupt stop of operation of the device 1.

When, by contrast, the remaining load is less than the first threshold, this means that the power supply to the device 1 will be soon insufficient to make it operate properly.

A light source 5 is thus commanded to be switched on responsive to the detection that the remaining load in the battery 4 is less than the first threshold. This allows the solar cell 7 to receive luminous energy (reference 6) and to change it into electric power supplied to the device 1. Therefore, the device can keep on operating. And the battery 4 can be loaded again above the first threshold.

To achieve this, a switch 2 can be used to switch on the light 5. The switch 2 is commanded to switch on the light 5 on reception of a corresponding command.

Advantageously, the switch 2 has communication means consistent with the ones of the device 1. For instance, the switch 2 can be an actor capable of receiving a signal from the device 1 over a radio communication channel 3, according to the above-mentioned ZigBee specification 053474r06.

In this case, an address of the switch 2 is advantageously configured in the device 1 to allow such direct transmission. Upon detection that the remaining load in the battery 4 is less than the first threshold, the device 1 thus sends a signal to the switch 2. The switch 2 responds to the signal by switching on the light 5.

It must be noted that the light source 5 can be of any type, provided that it generates luminous energy that will be converted into electric power by the solar cell 7. For instance, the light 5 could be a lamp, a light bulb, a tungsten halogen lamp, etc.

FIG.2 shows another example of architecture for implementing the invention. The device 1, solar cell 7, battery 4, switch 2 and light 5 are similar to the ones of FIG.1. However, the system of FIG.2 comprises a coordination device 8 which coordinates the exchanges between the device 1 and the switch 2 (possibly as well as other nodes of a network if any). This architecture is well adapted to the networked applications where a plurality of sensors/actors may communicate with each other in order to achieve predefined tasks.

Upon detection that the remaining load in the battery 4 is less than the first threshold, the device 1 sends a signal to the coordination device 8 (reference 3a). The coordination device 8 interprets the received signal and sends a command signal to the switch 2 so that the light 5 is switched on. The command signal sent to the switch 2 by the coordination device 8 can possibly incorporate the initial signal sent by the device 1 for instance.

This mode of operation implies that both the device 1 and the switch 2 are arranged for communicating with the coordination device 8. Such communication can use wireless means, such as radio means operating in accordance with the above-mentioned ZigBee specification 053474r06 for instance.

Therefore, the device 1 can operate as long as the associated battery 4 stores enough electric power. When the electric power stored in the battery 4 becomes insufficient because not enough light is received by the solar cell 7, the light 5 is switched on, which allows the solar cell 7 to keep on receiving luminous energy and converting it into electric power supplied to the device 1. This limits the risk that the device 1 durably stops operating because the battery 4 would be empty. This also enables to be less dependent on external light conditions (e.g. weather, duration of the day, etc.).

Advantageously, the battery 4 is designed to store a predetermined power amount set for supplying the device 1 for a whole darkness period, such as a night, after the solar cell 7 has been exposed to light for a whole light period, such as a day. This means that, under normal conditions, the device 1 can operate without interruption during a whole cycle, such as day/night.

In this case, the steps described above allow the device 1 to keep on operating even under unusual conditions. For instance, when the device 1 and its solar cell 7 are located indoor where the shutters have been closed for a long time (e.g. for vacation of the owners), the device 1 can still be supplied with power due to the fact that the battery 4 can continue to store power provided by the solar cell 7 receiving luminous energy from the light 5. Therefore, the light 5 is switched on only when unusual conditions occur.

In an advantageous embodiment of the invention, after the light 5 has been switched on, another comparison of a detected remaining load in the battery 4 can be made with a second threshold, in order to check whether there is still a need to produce artificial luminous energy.

The second threshold can be set so that the device 1 is supplied with power stored in the battery 4 for a predetermined duration for instance. Its value is preferably more than the first threshold value. A hysteresis can be chosen between the first and second threshold values, to avoid successive switch on / switch off sequences. For instance, the second threshold could be set between 25 and 35% of the total storage capacity of the battery 4.

When the comparison shows that the remaining load is less than the second threshold, this means that the remaining load is still low and that the light 5 is still necessary to increase the battery load, so that the device 1 can keep operating for a duration which is long enough.

When, by contrast, the remaining load is more than the second threshold, this means that the battery 4 has a relatively high power amount stored in it and that it can supply power to the device 1 for a duration which is long enough. In this case, there is no need to keep on increasing the battery load by lighting the solar cell 7. The device 1 can thus send a signal to the switch 2 or to the coordination device 8, so that the switch 2 switches the light 5 off.

This embodiment avoids producing artificial luminous energy unnecessarily and limits the power consumption cost induced by the lightening, since the light 5 is on only when other light sources (e.g. the daylight) are absent or insufficient.

## Claims

1. A method for supplying power to a device (1) comprising photosensitive means (7) arranged for changing a received luminous energy into electric power, the device being associated with power storage means (4) for storing electric power obtained by the photosensitive means, the method comprising the following steps :
- detecting a remaining load in the power storage means ; and
- when said remaining load is below a first threshold, commanding a light source (5) to be switched on.

2. A method as claimed in claim 1, comprising a further step of commanding the light source (5) to be switched off when the remaining load in the power storage means is above a second threshold, the second threshold value being more than the first threshold value.

3. A method as claimed in claim 1 or 2, wherein the light source (5) is controlled by a switch (2), wherein the device and the switch have communication means (3,3a,3b), and wherein commanding the light source to be switched on comprises sending a signal from the device (1) via said communication means (3,3a).

4. A method as claimed in claim 3, wherein said signal is sent directly to the switch (2).

5. A method as claimed in claim 3, wherein said signal is sent to a coordination device (8) and wherein commanding the light source (5) to be switched on further comprises sending a signal from the coordination device (8) to the switch (2) via said communication means (3b).

6. A method as claimed in any one of claims 3 to 5, wherein the communication means are wireless (3,3a,3b).

7. A method as claimed in any one of the foregoing claims, wherein said device (1) includes a sensor.

8. A method as claimed in any one of the foregoing claims, wherein the power storage means (4) are designed to store a predetermined amount of electric power set for supplying the device (1) substantially for a whole night after the photosensitive means (7) of the device have been exposed to the daylight substantially for a whole day.

9. A device (1) comprising photosensitive means (7) arranged for changing a received luminous energy into electric power, the device being associated with power storage means (4) for storing electric power obtained by the photosensitive means, said device further comprising :
- means for detecting a remaining load in the power storage means ; and
- means for commanding a light source (5) to be switched on when said remaining load is below a first threshold.

10. A device (1) as claimed in claim 9, further comprising means for commanding the light source (5) to be switched off when the remaining load is above a second threshold, the second threshold value being more than the first threshold value.

11. A device (1) as claimed in claim 9 or 10, wherein the light source (5) is controlled by a switch (2), wherein the device has communication means (3,3a) and wherein the means for commanding the light source to be switched on comprise means for sending a signal via said communication means.

12. A device (1) as claimed in claim 11, wherein the means (3) for sending a signal are arranged for sending the signal directly to the switch (2).

13. A device (1) as claimed in claim 11, wherein the means (3a) for sending a signal are arranged for sending the signal to a coordination device (8).

14. A device (1) as claimed in any one of claims 9 to 13, wherein the communication means (3,3a) are wireless.

15. A device (1) as claimed in any one of claims 9 to 14, including a sensor.

16. A device (1) as claimed in any one of claims 9 to 15, wherein the power storage means (4) are designed to store a predetermined amount of electric power set for supplying the device substantially for a whole night after the photosensitive means (7) of the device have been exposed to the daylight substantially for a whole day.
